# EUROPÄISCHE PATENTSCHRIFT

(11) **EP 0 773 377 B1**
(45) Veröffentlichungstag und Bekanntmachung des Hinweises auf die Patenterteilung: **27.03.2002**
(21) Anmeldenummer: 96117743.3
(22) Anmeldetag: 06.11.1996
(51) Int. Cl.: F16C 11/06

(54) **Kugelgelenk**
Ball joint
Joint à rotule

(30) Priorität: 11.11.1995 DE 19542071
(43) Veröffentlichungstag der Anmeldung: 14.05.1997
(73) Patentinhaber: TRW Fahrwerksysteme GmbH & Co. KG, 40547 Düsseldorf (DE)
(72) Erfinder: Dorr, Christoph, Dipl.-Ing., 40667 Meerbusch (DE)
(74) Vertreter: Stenger, Watzke & Ring Patentanwälte

(56) Entgegenhaltungen:
- DE-A- 2 443 091
- DE-C- 4 109 697
- US-A- 3 545 797

## Beschreibung

Die Erfindung betrifft ein insbesondere für Kraftfahrzeuge bestimmtes Kugelgelenk mit einem Kugelzapfen, dessen Gelenkkugel mittels einer Lagerschale, vorzugsweise aus Kunststoff, in einem Gelenkgehäuse verdrehbar und begrenzt kippbar gelagert ist, die durch einen vorzugsweise aus Metall bestehenden Verschlußring festgelegt ist, der in montiertem Zustand mit einer freien Stimkante am außenliegenden Ende an einer etwa radial verlaufenden, durch eine Hinterschneidung entstandenen Ringfläche des Gelenkgehäuses anliegt.

Ein derartiges Kugelgelenk ist aus der DE-A-24 43 091 bekannt. Bei dem bekannten Kugelgelenk wird die Gelenkkugel durch zwei im Gelenkgehäuse angeordnete Lagerschalen gehalten, wobei die obere Lagerschale mit das Gelenk belastenden Federelementen versehen ist. Der Haltering, der die untere Lagerschale im Gehäuse festlegt, ist geschlitzt.

Ausgehend von dem aus der DE-A-24 43 091 bekannten Kugelgelenk liegt der Erfindung die Aufgabe zugrunde, das Gelenk derart weiterzubilden, daß sich bei einfacher Konstruktion und mechanisierbarer Montage auch bei der Verwendung eines Gelenkgehäuses aus Kunststoff eine hohe Festigkeit bei einer Zugbelastung des Kugelzapfens in axialer Richtung ergibt.

Die Lösung dieser Aufgabenstellung durch die Erfindung ist im Anspruch 1 definiert, dadurch gekennzeichnet, daß die Lagerschale einstückig und der Verschlußring mit einem zweischenkligen Querschnitt ausgebildet ist, dessen radial innenliegender Schenkel eine Abstützfläche für den zwischen dem Äquator und der Öffnung für den Kugekzapfen verlaufenden, im Ausgangszustand zylindrischen Teil der Lagerschale bildet.

Durch diese erfindungsgemäße Ausbildung des Verschlußringes ergibt sich unter Verwendung einfacher Bauteile eine zuverlässige Festlegung der Lagerschale im Gelenkgehäuse, wobei der Verschlußring im wesentlichen zwei Funktionen übernimmt. Zum einen dient er mit seinem radial innenliegenden Schenkel als Abstützfläche für denjenigen Teil der Lagerschale, die den Kugelzapfen zwischen dessen Äquator und der Öffnung umschließt, die für den Kugelzapfen unter Berücksichtigung des maximalen Kippwinkels vorgesehen ist. Zum anderen bewirkt der radial außenliegende Schenkel des Verschlußringes eine zuverlässige Festlegung der Lagerschale im Gelenkgehäuse, da sich dieser Schenkel in montiertem Zustand mit seiner freien Stirnkante an einer etwa radial verlaufenden Ringfläche abstützt, die durch eine Hinterschneidung im Gelenkgehäuse gebildet ist. Hierdurch ergibt sich bei einer Zugbelastung des Kugelzapfens in axialer Richtung eine mit steigender Belastung zunehmende Haltekraft, so daß das erfindungsgemäß weitergebildete Kugelgelenk aus wenigen und kostengünstig herstellbaren Einzelteilen auch bei der Verwendung eines aus Kunststoff hergestellten Gelenkgehäuses sowohl als Radialgelenk als auch Axialgelenk eingesetzt werden kann.

Gemäß einem weiteren Merkmal der Erfindung ist im Gelenkgehäuse eine ringförmige Anschlagfläche für den Scheitel- bzw. Stegbereich des zweischenkligen Verschlußringes ausgebildet, und zwar vorzugsweise im Bereich des Äquators der Lagerschale. Diese ringförmige Anschlagfläche ergibt eine definierte Lage des Verschlußringes innerhalb des Gelenkgehäuses, so daß eine einfache Montage des Kugelgelenks mit kostengünstigen Montagemaschinen möglich ist.

Der vorzugsweise aus Metall bestehende Verschlußring kann im Querschnitt V-förmig oder im Querschnitt U-förmig mit von einem Steg ausgehenden, divergierenden Schenkeln ausgebildet sein. In beiden Fällen wird erreicht, daß der radial innenliegende Schenkel als Abstützfläche für die Lagerschale dient und der radial außenliegende Schenkel mit seiner freien Stirnkante für eine zuverlässige Festlegung des Verschlußringes und damit der Lagerschale im Gelenkgehäuse sorgt.

Der außenliegende Schenkel des Verschlußringes kann hierbei elastisch verformbar sein, so daß er bei der Montage sich selbsttätig aufgrund seiner Rückfedereigenschaften mit der freien Stirnkante an der durch eine Hinterschneidung im Gelenkgehäuse gebildeten Ringfläche anlegt. Alternativ kann der außenliegende Schenkel des Verschlußringes auch plastisch verformbar sein, so daß er beim Einsetzen des Verschlußringes in das Gelenkgehäuse derart aufgeweitet werden kann, daß sich seine freie Stirnkante an der Ringfläche im Gelenkgehäuse anlegt. Um das Maß der Verformbarkeit bzw. die Elastizität zu erhöhen, kann der außenliegende Schenkel des Verschlußringes mindestens einmal geschlitzt sein.

Mit der Erfindung wird weiterhin vorgeschlagen, die Lagerschale im Bereich des Äquators mit einem radial nach außen abstehenden Flanschring zur Festlegung zwischen dem Gelenkgehäuse und dem Verschlußring auszubilden. Hierdurch erfolgt eine verdreh- und kippsichere Festlegung der Lagerschale mit Hilfe des Verschlußringes im Gelenkgehäuse. Wenn der Flanschring gemäß einem weiteren Merkmal der Erfindung mindestens einseitig mit einem toleranzausgleichenden Wulst versehen wird, können zugleich die Anforderungen an die Genauigkeit der Einzelteile verringert werden, weil dieser Wulst durch Verformung vorhandene Toleranzen ausgleicht.

Das Gelenkgehäuse des erfindungsgemäß weitergebildeten Kugelgelenkes wird vorzugsweise aus geeignetem Kunststoff hergestellt. Um die der Anlage der freien Stirnkante des radial außenliegenden Schenkels des Verschlußringes dienende, etwa radial verlaufende Ringfläche preiswert in Form einer Hinterschneidung im Gelenkgehäuse herstellen zu können, wird mit der Erfindung schließlich vorgeschlagen, diese Ringfläche auf mehrere, im Abstand voneinander liegende Ringflächenabschnitte aufzuteilen, so daß sich eine einfache Möglichkeit zur Entformung des Gelenkgehäuses aus einem Spritzgießwerkzeug ergibt.

Auf der Zeichnung ist ein Ausführungsbeispiel des erfindungsgemäßen Kugelgelenks dargestellt, und zwar zeigen:
- Fig. 1: einen Axialschnitt durch das Kugelgelenk,
- Fig. 2: die Einzelteile des Kugelgelenks nach Fig. 1 im Schnitt und
- Fig. 3: eine Ansicht des Gelenkgehäuses von der Öffnungsseite her.

Das insbesondere zur Verwendung an Kraftfahrzeugen bestimmte Kugelgelenk umfaßt einen Kugelzapfen 1, der mittels eines Gewindezapfens 1a an einem Teil der Radaufhängung oder Lenkung eines Kraftfahrzeuges befestigt wird und der mittels einer Gelenkkugel 1b über eine Lagerschale 2 in einem Gelenkgehäuse 3 verdrehbar und begrenzt kippbar gelagert ist. Das gemäß der Darstellung aus Kunststoff hergestellte Gelenkgehäuse 3 ist beim Ausführungsbeispiel am Ende einer Fahrwerksstrebe 3a angeformt.

Beim Ausführungsbeispiel ist der Kugelzapfen 1 im Bereich zwischen der Gelenkkugel 1b und dem Gewindezapfen 1a mit einem im Durchmesser vergrößerten Flanschteil 1c ausgebildet, in dessen Mantelfläche eine Rille 1d zur Festlegung des zapfenseitigen Endes eines Dichtungsbalges 4 ausgebildet ist. Das gehäuseseitige Ende des Dichtungsbalges 4 ist in einer Ringnut 3b des Gelenkgehäuses 3 festgelegt. In beiden Fällen kann die Festlegung durch einen oder mehrere Halteringe 5 unterstützt werden.

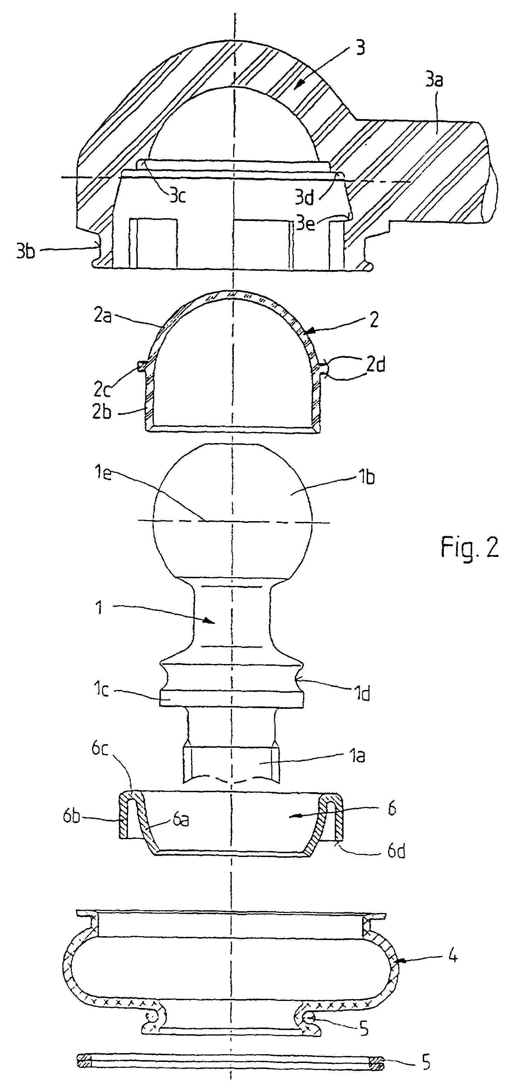

Die ebenfalls aus Kunststoff hergestellte Lagerschale 2 besitzt im Ausgangszustand die in Fig. 2 dargestellte Form mit einem halbkugelförmigen Oberteil 2a und einem sich an dieses Oberteil 2a anschließenden Unterteil 2b in der Form eines kreiszylindrischen Ringes. Der Übergang zwischen Oberteil 2a und Unterteil 2b liegt etwa im Bereich des Äquators 1e der Gelenkkugel 1b, der in Fig. 2 eingezeichnet ist.

Im Bereich des Übergangs zwischen Oberteil 2a und Unterteil 2b ist die Lagerschale 2 auf ihrer Mantelfläche mit einem radial nach außen abstehenden Flanschring 2c versehen, der beim Ausführungsbeispiel sowohl an der Oberseite als auch an der Unterseite mit einem kleinen Wulst 2d versehen ist. Das Material dieser Wülste 2d ist leicht verformbar und dient auf diese Weise dem Ausgleich etwa vorhandener Toleranzen bei der Festlegung der Lagerschale 2 im Gelenkgehäuse 3.

Diese Festlegung der Lagerschale 2 mittels ihres Flanschringes 2c an einer ringförmigen Aussparung 3c des Gelenkgehäuses 3 erfolgt durch einen Verschlußring 6, der vorzugsweise aus Metall hergestellt ist, aber auch aus einem geeigneten Kunststoff bestehen kann. Der Verschlußring 6 hat einen zweischenkligen Querschnitt mit einem radial innenliegenden Schenkel 6a und einem radial außenliegenden Schenkel 6b, wobei der Querschnitt insgesamt entweder V-förmig oder U-förmig sein kann. Bei dem auf der Zeichnung dargestellten Ausführungsbeispiel hat der Verschlußring 6 einen U-förmigen Querschnitt mit einem Steg 6c, von dem die divergierenden Schenkel 6a und 6b ausgehen, wie dies besonders deutlich in Fig. 2 zu erkennen ist.

Um eine exakten Sitz des Verschlußringes 6 im Gelenkgehäuse 3 vorzugeben, ist das Gelenkgehäuse 3 mit einer ringförmigen Anschlagfläche 3d für den Scheitel- bzw. Stegbereich des zweischenkligen Verschlußringes 6 ausgebildet. Diese Anschlagfläche 3d ist ebenso wie die ringförmige Aussparung 3c für den Flanschring 2c der Lagerschale 2 am besten in Fig. 2 zu erkennen.

Das in Fig. 2 im Schnitt dargestellte Gelenkgehäuse 3 ist weiterhin mit einer etwa radial verlaufenden Ringfläche 3e versehen, die durch eine Hinterschneidung im Gelenkgehäuse 3 gebildet ist. Sowohl die Schnittdarstellung in Fig. 2 als auch die Ansicht in Fig. 3 lassen erkennen, daß beim Ausführungsbeispiel die Ringfläche 3e auf mehrere, im Abstand voneinander liegende Ringflächenabschnitte 3e' aufgeteilt ist, so daß sich die Hinterschneidungen in einem Spritzgießwerkzeug beispielsweise durch handelsübliche Einfallkerne oder Verdrehen von Werkzeugkernen problemlos herstellen lassen.

Zur Montage des Kugelgelenks wird der Kugelzapfen 1 mit auf die Gelenkkugel 1b aufgesetzter Lagerschale 2 in das Gelenkgehäuse 3 eingeführt bis der Flanschring 2c der Lagerschale 2 an der ringförmigen Aussparung 3c des Gelenkgehäuses 3 anliegt. Hierbei steht das zylindrische Unterteil 2b der Lagerschale 2 vom unteren Teil der Gelenkkugel 1b ab.

Nunmehr wird der Verschlußring 6 eingebracht bis dessen Steg 6c an der Anschlagfläche 3d des Gelenkgehäuses 3 anliegt. Hierbei verformt der radial innenliegende Schenkel 6a des Verschlußringes 6 das Unterteil 2b der Lagerschale 2 derart, daß auch dieses Unterteil an demjenigen Teil der Gelenkkugel 1b anliegt, der sich zwischen dem Äquator 1e der Gelenkkugel 1b und dem sich anschließenden halsförmigen Teil des Kugelzapfens 1 erstreckt. Der eine kugelringförmige Abstützfläche für das Unterteil 2b der Lagerschale 2 bildende innenliegende Schenkel 6a des Verschlußringes 6 bewirkt somit eine großflächige und zuverlässige Lagerung und Fixierung der Gelenkkugel 1b durch die Lagerschale 2.

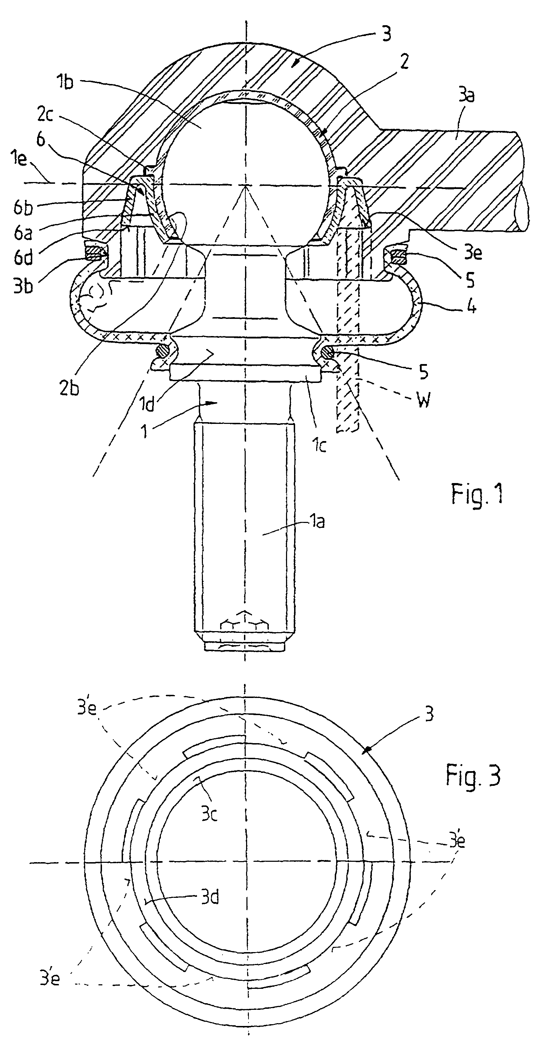

Der radial außenliegende Schenkel 6b des Verschlußringes 6 liegt in montiertem Zustand mit seiner freien Stirnkante 6d an der Ringfläche 3e bzw. an den Ringflächenabschnitten 3e' des Gelenkgehäuses 3, wie aus Fig. 1 hervorgeht. Dieses Zusammenwirken zwischen den freien Stirnkanten 6d des außenliegenden Schenkels 6b und der Ringfläche 3e bzw. den Ringflächenabschnitten 3e' des Gelenkgehäuses 3 wird entweder bei elastisch verformbarem Schenkel 6b durch dessen Rückfederkraft oder bei plastisch verformbarem Schenkel 6b durch ein Aufweitwerkzeug W erreicht, das in Fig. 1 gestrichelt angedeutet ist und nach Zusammenfügen der Einzelteile in das Innere des Verschlußringes 6 eingebracht wird.

Sobald der Verschlußring 6 die in Fig. 1 dargestellte Lage einnimmt, ist die Montage des Kugelgelenkes beendet. Die sich an den durch Hinterschneidungen hergestellten Ringflächenabschnitten 3e' abstützende Stirnkante 6d des Verschlußringes 6 stellt bei einer axialen Zugbelastung des Kugelzapfens 1 eine selbstverstärkende Sicherung dar, da eine derartige Zugbelastung die Abstützung des Verschlußringes 6 über seinen außenliegenden Schenkel 6b im Gelenkgehäuse 3 mit zunehmender Belastung verstärkt.

Abschließend kann - ggf. nach einer Fettfüllung des Gelenkes - der Dichtungsbalg 4 montiert werden, indem dessen gehäuseseitige Randverstärkung in die Ringnut 3b des Gelenkgehäuses 3 und seine zapfenseitige Randverstärkung in die Rille 1d des Kugelzapfens 1 eingelegt und dort jeweils durch einen Haltering 5 gesichert wird. Der Kippbereich des verdrehbar und begrenzt kippbar gelagerten Kugelzapfens 1 ist gestrichelt in Fig. 1 angedeutet.

### Bezugszeichenliste:

- 1: Kugelzapfen
- 1a: Gewindezapfen
- 1b: Gelenkkugel
- 1c: Flanschteil
- 1d: Rille
- 1e: Äquator
- 2: Lagerschale
- 2a: Oberteil
- 2b: Unterteil
- 2c: Flanschring
- 2d: Wulst
- 3: Gelenkgehäuse
- 3a: Fahrwerksstrebe
- 3b: Ringnut
- 3c: Aussparung
- 3d: Anschlagfläche
- 3e: Ringfläche
- 3e': Ringflächenabschnitt
- 4: Dichtungsbalg
- 5: Haltering
- 6: Verschiußring
- 6a: innenliegender Schenkel
- 6b: außenliegender Schenkel
- 6c: Steg
- 6d: Stirnkante
- W: Aufweitwerkzeug

## Patentansprüche

1. Kugelgelenk, insbesondere für Kraftfahrzeuge, mit einem Kugelzapfen (1), dessen Gelenkkugel (1b) mittels einer Lagerschale (2), vorzugsweise aus Kunststoff, in einem Gelenkgehäuse (3) verdrehbar und begrenzt kippbar gelagert ist, die durch einen vorzugsweise aus Metall bestehenden Verschlußring (6) festlegbar ist, der in montiertem Zustand mit einer freien Stirnkante (6d) am außenliegenden Ende an einer etwa radial verlaufenden, durch eine Hinterschneidung entstandenen Ringfläche (3e) des Gelenkgehäuses anliegt,
**dadurch gekennzeichnet,**
**daß** die Lagerschale (2) einstückig und der Verschlußring (6) mit einem zweischenkligen Querschnitt ausgebildet ist, dessen radial innenliegender Schenkel (6a) eine Abstützfläche für den zwischen dem Äquator (1e) und der Öffnung für den Kugelzapfen (1) verlaufenden, im Ausgangszustand zylindrischen Teil (2b) der Lagerschale (2) bildet und daß im Gelenkgehäuse (3) eine ringförmige Anschlagfläche (3d) für den Scheitel- bzw. Stegbereich des zweischenkligen Verschlußringes (6) ausgebildet ist.

2. Kugelgelenk nach Anspruch 1, **dadurch gekennzeichnet, daß** die Anschlagfläche (3d) im Bereich des Äquators (1e) der Lagerschale (2) ausgebildet ist.

3. Kugelgelenk nach mindestens einem der Ansprüche 1 oder 2, **dadurch gekennzeichnet, daß** der Verschlußring (6) im Querschnitt V-förmig ausgebildet ist.

4. Kugelgelenk nach mindestens einem der Ansprüche 1 bis 3, **dadurch gekennzeichnet, daß** der Verschlußring (6) im Querschnitt U-förmig mit von einem Steg (6c) ausgehenden, divergierenden Schenkeln (6a,6b) ausgebildet ist.

5. Kugelgelenk nach mindestens einem der Ansprüche 1 bis 4, **dadurch gekennzeichnet, daß** der außenliegende Schenkel (6b) des Verschlußringes (6) elastisch verformbar ist.

6. Kugelgelenk nach mindestens einem der Ansprüche 1 bis 5, **dadurch gekennzeichnet, daß** der außenliegende Schenkel (6b) des Verschlußringes (6) plastisch verformbar ist.

7. Kugelgelenk nach Anspruch 5 oder 6, **dadurch gekennzeichnet, daß** der außenliegende Schenkel (6b) des Verschlußringes (6) mindestens einmal geschlitzt ist.

8. Kugelgelenk nach mindestens einem der Ansprüche 1 bis 7, **dadurch gekennzeichnet, daß** die Lagerschale (2) im Bereich des Äquators (1e) mit einem radial nach außen abstehenden Flanschring (2c) zur Festlegung zwischen dem Gelenkgehäuse (3) und dem Verschlußring (6) ausgebildet ist.

9. Kugelgelenk nach Anspruch 8, **dadurch gekennzeichnet, daß** der Flanschring (2c) mindestens einseitig mit einem toleranzausgleichenden Wulst (2d) versehen ist.

10. Kugelgelenk nach mindestens einem der Ansprüche 1 bis 9, **dadurch gekennzeichnet, daß** das Gelenkgehäuse (3) aus Kunststoff hergestellt ist

11. Kugelgelenk nach Anspruch 10, **dadurch gekennzeichnet, daß** die der Anlage der freien Stirnkante (6d) des Verschlußringes (6) dienende Ringfläche (3e) im Gelenkgehäuse (3) auf mehrere, im Abstand voneinander liegende Ringflächenabschnitte (3e') aufgeteilt ist.

## Claims

1. Ball joint, in particular for motor vehicles, comprising a ball-ended spindle (1), the joint ball (1b) of which is supported so as to be rotatable and tiltable to a limited extent in a joint housing (3) by means of a bearing shell (2), which is preferably made of plastics material and is fixable by means of a lock ring (6), which is preferably made of metal and in the mounted state rests with a free end edge (6d) of its outer end against an approximately radially extending, undercut annular face (3e) of the joint housing,
**characterized in**
**that** the bearing shell (2) is of an integral construction and the lock ring (6) is designed with a two-limbed cross section, of which the radially inner limb (6a) forms a supporting surface for the, in the initial state, cylindrical part (2b) of the bearing shell (2) extending between the equator (1e) and the opening for the ball-ended spindle (1) and that an annular stop face (3d) for the apex and/or web region of the two-limbed lock ring (6) is formed in the joint housing (3).

2. Ball joint according to claim 1, **characterized in that** the stop face (3d) is formed in the region of the equator (1e) of the bearing shell (2).

3. Ball joint according to at least one of claims 1 or 2, **characterized in that** the lock ring (6) in cross section is of a V-shaped construction.

4. Ball joint according to at least one of claims 1 to 3, **characterized in that** the lock ring (6) in cross section is of a U-shaped construction having divergent limbs (6a, 6b) emanating from a web (6c).

5. Ball joint according to at least one of claims 1 to 4, **characterized in that** the outer limb (6b) of the lock ring (6) is elastically deformable.

6. Ball joint according to at least one of claims 1 to 5, **characterized in that** the outer limb (6b) of the lock ring (6) is plastically deformable.

7. Ball joint according to claim 5 or 6, **characterized in that** the outer limb (6b) of the lock ring (6) is slit at least once.

8. Ball joint according to at least one of claims 1 to 7, **characterized in that** the bearing shell (2) in the region of the equator (1e) is designed with a radially outwardly projecting flange ring (2c) for fixing between the joint housing (3) and the lock ring (6).

9. Ball joint according to claim 8, **characterized in that** the flange ring (2c) is provided at least at one side with a tolerance-compensating bead (2d).

10. Ball joint according to at least one of claims 1 to 9, **characterized in that** the joint housing (3) is manufactured from plastics material.

11. Ball joint according to claim 10, **characterized in that** in the joint housing (3) the annular face (3e) used for seating the free end edge (6d) of the lock ring (6) is subdivided into a plurality of spaced-apart annular face portions (3e').

## Revendications

1. Articulation sphérique, en particulier pour véhicules automobiles, avec un pivot sphérique (1), dont la rotule (1b) est logée de façon à pouvoir tourner dans un boîtier d'articulation (3) et basculer de façon limitée au moyen d'une coquille de coussinet (2), de préférence à base de matière plastique, qui peut être fixée par une bague de fermeture (6) de préférence en métal, qui s'appuie dans l'état monté avec une arête frontale (6d) libre sur l'extrémité extérieure sur une surface annulaire (3e), agencée à peu près dans le sens radial et obtenue par une contre-dépouille, du boîtier d'articulation, **caractérisée en ce que** la coquille de coussinet (2) est d'un seul tenant et la bague de fermeture (6) est conçue avec une section à deux branches, dont la branche (6a) intérieure au plan radial forme une surface d'appui pour la partie (2b), cylindrique dans l'état initial et agencé entre l'équateur (1e) et l'ouverture pour le pivot sphérique (1), de la coquille de coussinet (2) et **en ce qu'**une surface de butée (3d) de forme annulaire est réalisée dans le boîtier d'articulation (3) pour la zone supérieure ou transversale de la bague de fermeture (6) à deux branches.

2. Articulation sphérique selon la revendication 1, **caractérisée en ce que** la surface de butée (3d) est conçue dans la zone de l'équateur (1e) de la coquille de coussinet (2).

3. Articulation sphérique selon au moins l'une des revendications 1 ou 2, **caractérisée en ce que** la bague de fermeture (6) est réalisée avec une section en forme de V.

4. Articulation sphérique selon au moins l'une des revendications 1 à 3, **caractérisée en ce que** la bague de fermeture (6) est conçue avec une section en forme de U avec des branches (6a, 6b) divergentes et partant d'une traverse (6c).

5. Articulation sphérique selon au moins l'une des revendications 1 à 4, **caractérisée en ce que** la branche (6b) extérieure de la bague de fermeture (6) est déformable de façon élastique.

6. Articulation sphérique selon au moins l'une des revendications 1 à 5, **caractérisée en ce que** la branche (6b) extérieure de la bague de fermeture (6) est déformable plastiquement.

7. Articulation sphérique selon la revendication 5 ou 6, **caractérisée en ce que** la branche (6b) extérieure de la bague de fermeture (6) est fendue au moins une fois.

8. Articulation sphérique selon au moins l'une des revendications 1 à 7, **caractérisée en ce que** la coquille de coussinet (2) est réalisée dans la zone de l'équateur (1e) avec une bague à bride (2c) débordant radialement vers l'extérieur pour la fixation entre le boîtier d'articulation (3) et la bague de fermeture (6).

9. Articulation sphérique selon la revendication 8, **caractérisée en ce que** la bague à bride (2c) est pourvue au moins sur un côté d'un renflement (2d) d'équilibrage de tolérance.

10. Articulation sphérique selon au moins l'une des revendications 1 à 9, **caractérisée en ce que** le boîtier d'articulation (3) est en matière plastique.

11. Articulation sphérique selon la revendication 10, **caractérisée en ce que** la surface de bague (3e) servant à l'appui de l'arête frontale libre (6d) de la bague de fermeture (6) est divisée dans l'articulation sphérique (3) en plusieurs parties de surface annulaire (3e') espacées les unes des autres.
